# EUROPEAN PATENT SPECIFICATION

(11) **EP 3 106 067 B1**
(45) Date of publication and mention of the grant of the patent: **31.07.2019**
(21) Application number: 15172077.8
(22) Date of filing: 15.06.2015
(51) Int. Cl.: G03B 21/56, G03B 21/62, A47F 11/06

(54) **INSULATING GLAZING UNIT WITH PROJECTION AND INPUT MEANS**
ISOLIERGLASEINHEIT MIT PROJEKTIONS- UND EINGABEMITTELN
VITRAGE ISOLANT AVEC MOYENS DE PROJECTION ET D'ENTRÉE

(43) Date of publication of application: 21.12.2016
(73) Proprietor: Seloy Oy, 32700 Huittinen (FI)
(72) Inventor: Kiuru, Henri, 32700 Huittinen (FI)
(74) Representative: Papula Oy

(56) References cited:
- EP-A2- 1 530 078
- EP-A2- 2 824 544
- WO-A1-2007/065694
- US-A1- 2012 285 089
- US-A1- 2014 078 410
- US-A1- 2014 208 957

## Description

### TECHNICAL FIELD

The invention relates to an insulation glazing unit, a window comprising the insulation glazing unit and a method for manufacturing the same.

### BACKGROUND

Glass panes, such as those for exhibition displays in museums, may be provided with touch control for controlling information displayed e.g. on an LCD panel behind the glass pane. However, such simple glass panes may not be used for all purposes where touch controlled displays are desirable.

In display windows, such as shop windows, in particular in colder climates, a window element such as an insulation glazing unit may be the only glass unit, so that it constitutes the outer surface of the window. Such a window element may often be a two-layered insulation glazing unit provided with an intermediate space between two panes or sheets of glass or another suitable material. Such window elements may have a thickness of 20 mm or more, and providing them with touch control by touch from the outer side of the display window may be challenging.

Further, placing an LCD panel or a similar display behind the window element may also have drawbacks, such as requiring bulky installation means.

US 2014/208957 describes a microwave oven provided with a door comprising an operation display portion including a liquid crystal touch panel.

EP 2824544 describes an electronic device provided with a display device.

US 2012/0285089 discloses a door assembly comprising a front pane, a rear pane, and an LCD panel between them.

US 2014/0078410 describes a window apparatus comprising a first layer, wherein the first layer includes a liquid crystal microdroplet display.

WO 2007/065694 describes a projection glass element, in which at least one glass element has projection properties.

### SUMMARY

A window element for controlling information reflected or projected to a surface of the window element by means of an interactive film attached to the window element comprises at least two panes forming an intermediate space between the at least two panes. The interactive film is disposed in the intermediate space and attached to a first pane of the at least two panes, and the controlling is implementable by touch through the first pane. The window element further comprises a projection film for displaying the information reflected or projected thereon, which projection film is disposed in the intermediate space between the at least two panes. The window element is an insulation glazing unit.

### BRIEF DESCRIPTION OF THE DRAWINGS

The accompanying drawings, which are included to provide a further understanding of the invention and constitute a part of this specification, illustrate embodiments and together with the description help to explain the principles of the invention. In the drawings:
Fig. 1 illustrates an outside view of a window of a building comprising a window element;
Fig. 2 shows a side view of an embodiment of the window element;
Fig. 3 shows a side view of another embodiment of the window element;
Fig. 4 illustrates a side view of yet another embodiment of the window element; and
Fig. 5 shows a side view of yet another embodiment of the window element.

### DETAILED DESCRIPTION

A window element for controlling information reflected or projected to a surface of the window element by means of an interactive film attached to the window element comprises at least two panes, such as glass panes, or sheets, such as glass sheets, forming an intermediate space between the at least two panes. The interactive film is disposed in the intermediate space and attached to a first pane of the at least two panes, and the controlling is implementable by touch through the first pane. The window element further comprises a projection film for displaying the information reflected or projected thereon, which projection film is disposed in the intermediate space between the at least two panes.

The window element may comprise two, three, or more panes.

In the context of this specification, the term "an intermediate space" may refer to one or more intermediate spaces. The window element may, in other words, comprise one, two or more separate intermediate spaces between the panes. For instance, where the window element comprises three panes, two separate intermediate spaces may be considered to be formed between the three panes. In embodiments where there are two or more intermediate spaces, the interactive film and the projection film may be disposed in the same intermediate space or they may be disposed in two different intermediate spaces.

The at least two panes may be attached to each other via suitable means for attaching panes together, such as one or more spacer bars (spacers) disposed between the panes, one or more adhesive strips, sealants and/or fillers. The spacer bar separates the panes. Window elements attached in this manner are also known as insulation glazings or insulation glazing units. The one or more spacer bars may have a thickness of about 6 to 20 mm. A spacer bar may be e.g. a bar made of aluminium, steel or plastic or other suitable material, provided between the panes. The spacer bar may also be made of an elastic and/or resilient material, e.g. a thermoplastic elastomer such as polysulfide or butyl. Such spacer bars are also known as thermoplastic spacers. The bar may be sealed by means of an adhesive, a sealant or a filler, e.g. a butyl strip or an elastic mass such as butyl filler or polysulfide. In the context of this specification, the term "polysulfide" may be understood as referring to a polysulfide elastomeric polymer. Suitable filler materials may be e.g. silicone, polysulfide, or butyl. In the context of this specification, the term "butyl" may be understood as referring to butyl rubber, also known as polyisobutylene. The spacer may also include a desiccant, such as a zeolite, for absorbing any moisture remaining in an intermediate space. As an example, the window element may comprise a spacer bar formed of butyl sealed with polysulfide. In such an example, the butyl spacer bar may be capable of adhering to the panes mechanically or via a chemical bond.

The window element may also be a structural glazing (SG) or a half structural glazing (half SG) . In such glazings, the at least two panes may also be attached to a frame so that an outermost or innermost pane, for instance the first pane, is mounted on the frame by gluing it directly onto the frame e.g. with silicon. The outermost (i.e. the outer surface of the window element when in use) or innermost pane may be larger than the other panes so that one, two, three or four of its edges extend beyond the edge of the other panes. One or more edges of the panes of a half SG may be attached via a spacer bar, while one or more other edges are glued onto the frame.

The projection film may be attached to a second pane of the at least two panes. In such an embodiment, the second pane is different from the first pane to which the interactive film is attached. The projection film may be attached to the surface of the second pane.

Each of the at least two panes has two surfaces or faces and typically four outer edges. The interactive film and/or the projection film may be attached to a surface of a pane either directly, so that the film is in direct contact with the surface of the pane, or indirectly, e.g. via a medium such as an adhesive or via suitable fastening means disposed between the film and the surface of the pane. A surface or face of a pane that is towards an intermediate space may be considered to be an inner surface. The surface of a pane that forms an external surface of the window element may be considered to be an outer surface. The interactive film and the projection film may thus be attached to an inner surface of a pane.

Each pane may have a thickness of about 2 to about 27 mm. The thickness of the first pane may be selected independently from the thickness of the second and/or third pane. Each pane may also have a thickness of about 4 to about 16 mm. Pane thicknesses tend to be approximate, i.e. the thickness of a single pane is not necessarily uniform but may vary e.g. within the range of 0.5 mm below or above the indicated thickness (±0.5 mm). Therefore, if the thickness of a glass pane is indicated as 4 mm or about 4 mm, the actual thickness of the glass pane measured at different locations along the area of the pane may actually vary e.g. within the range of approx. 3.5-4.5 mm. Therefore the thickness of the pane may also be understood as the average thickness of the pane or the thickness averaged across the area of the pane.

The interactive film and the projection film may be attached to opposing surfaces of a first and a second pane.

The interactive film may be attached to the surface of the first pane and the projection film may be attached to the surface of a second pane. As the interactive film is attached to the inner surface of the first pane, i.e. the surface of the first pane facing or opposite to the second pane, and the projection film is attached to the inner surface of the second pane, i.e. the surface of the second pane facing or opposite to the first pane, they are both disposed in the intermediate space.

The interactive film and the projection film may thus be separated by a distance. The distance may be at least about 1 mm, or at least about 5 mm. The distance may also be in the range of about 1 mm to about 70 mm or about 5 mm to about 20 mm. Having a distance between the films may improve image quality e.g. as opposed to the films being in direct contact with each other. The distance may depend e.g. on the thickness of the interactive film and the projection film and on the distance between the panes. As an example, if the first and the second pane are separated by a spacer bar having a thickness of 6 mm, and the interactive film and the projection film both have a thickness of about 100 µm, the distance may be about 6 mm or slightly less. As pane thicknesses tend to be approximate, the distance measured at different locations along the area of the panes may also actually vary. Therefore the distance may also be understood as the average distance or the distance averaged across the area of the interactive film and the projection film, where they are in alignment.

The window element may comprise at least two panes, wherein the projection film may be attached to a second pane of the at least three panes, and the second pane may be the pane closest to the first pane. The window element may also comprise at least three panes, wherein the projection film may be attached to a second pane of the at least three panes, and the second pane may be the pane closest to the first pane. The projection film and the interactive film are thus disposed in the same intermediate space. In such an embodiment, the distance separating the interactive film and the projection film is relatively small, which may improve the functioning of the touch control. In such an embodiment, the distance separating the interactive film and the projection film may be e.g. at least 1 mm, or at least 5 mm, or in the range of about 1 to about 20 mm, or about 5 to about 20 mm.

The interactive film and the projection film may also be at least partially superimposed and attached to a first pane. In other words, both the interactive film and the projection film may be attached to the first pane so that they are both disposed in the intermediate space. In such an embodiment, the interactive film and the projection film may both be attached on the surface of the first pane. Alternatively, the interactive film may be attached to the surface of the first pane, and the projection film may be attached to the interactive film. The projection film may be attached to the interactive film directly, so that the interactive film and the projection film are in direct contact, or indirectly, e.g. via a medium such as an adhesive or suitable fastening means.

The interactive film may be attached to at least a portion of the surface of the first pane, so as to cover at least a portion of the area of the inner surface of the pane. The interactive film may also cover the entire area of the inner surface of the pane. Likewise, the projection film may be attached to at least a portion of the surface of a pane, so as to cover at least a portion of the area of the inner surface of the pane. The projection film may also cover the entire area of the inner surface of a pane.

The interactive film and the projection film may be disposed at least partially in alignment, or they may be disposed in alignment. The interactive film may also cover only a portion of the area of the projection film, so that they are disposed only partially in alignment. For instance, the interactive film may be smaller or larger than the projection film and may therefore be disposed only partially in alignment with the projection film.

The projection film may be suitable for or adapted to render information or an image reflected or projected thereto visible. It may be capable of receiving and scattering light sufficiently to render information or an image reflected or projected thereto, so that the information or image is visible. The projection film may be a rear projection film. The projection film may also have other suitable optical properties. Examples of suitable projection films are e.g. the projection films commercially available under the trade name Clearview™ (Pro Display TM Limited, Barnsley, UK) or those available under the trade name ProFilm TRANSPARENT (Projectionfilm.com, Spain). Other projection films are also known.

The projection film may be essentially transparent or transparent. Such a projection film may allow objects behind the window element to be visible through the window element when information is not projected to the window element. Such a projection film may have e.g. a light transmittance of at least 80 % or at least 90 %.

The interactive film may be a touch-sensitive film. The touch-sensitive film may be capable of sensing touch capacitively, resistively, inductively, or by any other touch detection mechanism.

An interactive film or a touch-sensitive film may be understood here broadly so as to cover all user interface films operated by touching the window element e.g. by a fingertip or a stylus, and other types of films for detecting the presence, location, and/or movement of one or more such fingers, pointers or other objects.

The terms "interactive" and/or "touch" may be interpreted broadly, covering, in addition to true physical contact between a finger, stylus or other pointer and the window element, also situations where such a pointer is brought to a sufficiently close proximity to the window element to be detected by the interactive film. The interactive or touch-sensitive film is not limited to any particular detection principle. The interactive film or touch-sensitive film may be a capacitive film. A capacitive film may refer to an interactive film or a touch-sensitive film by using which the detection of a touch can be primarily based on a capacitive sensing principle. On the other hand, interactive film or touch-sensitive film may also operate inductively. Inductive operation may refer to operation wherein an object induces an inductive coupling between the film and the ambient, or between different points of the film. Further, the interactive film or touch-sensitive film may operate resistively. Resistive operation may refer to operation wherein an object causes a detectable change in the resistivity/current or voltage across an electrical pathway or a collection of pathways in the film, and this detectable change can then be converted into a location. Examples of suitable interactive films are e.g. capacitance films commercially available under the trade name touchfoil™ (visualplanet, Cambridge, UK). Other interactive or touch-sensitive films are also known.

The interactive film or touch-sensitive film may also be essentially transparent or transparent. Such an interactive film or touch-sensitive film may have e.g. a light transmittance of at least 80 % or at least 90 %. Such films may minimize interference and reduction in the quality of the information or image rendered by the projection film when seen through the interactive film. Such films may also allow objects behind the window element to be visible through the window element when information is not projected to the window element.

The interactive film may require electricity to function. An electrical cable may be laid to the interactive film e.g. by means of a lead-through arrangement, such as a lead-through arrangement fitted in a spacer bar that separates the panes. The lead-through and/or the cable may be sealed using a suitable mass, such as a butyl strip or an elastic mass, to improve the sealing and the adhesion of the cable. Any electronic components that are connected to the interactive film may be disposed within the window element, e.g. in an intermediate space, or they may be disposed outside the panes and any bar that separates the panes by means of a lead-through arrangement.

The thickness of the first pane may be e.g. in the range of about 2 to about 27 mm, or about 4 to about 16 mm. The interactive film may thus be capable of detecting touch through a pane having a thickness in the range of about 2 to about 27 mm.

The at least two panes may, in principle, be of any material suitable for a window element, such as glass or plastic, e.g. plexiglass. The at least two panes may be glass panes, such as panes of float glass, tempered glass, laminated glass or fire resistant glass.

The panes may also have a coating, such as a low emissivity (low-e) coating, a sun protection coating, a self-cleaning coating, an anti-condensation coating, or an anti-reflective coating. The panes having a coating may be panes of float glass, tempered glas or laminated glass. The coating may improve the properties of the window element. The coating or the pane having the coating may also be selected so as not to interfere with the functioning of the interactive film or the projection film.

The glass panes may also be anti-reflective glass panes. Anti-reflective glass panes reduce or eliminate reflections of sunlight, ambient light and light originating from another source, i.e. light other than the light carrying the information reflected or projected to the window element, and may thereby improve image quality of the information reflected or projected to the projection film.

An intermediate space may be filled with argon gas. The argon gas may improve thermal insulation of the window element, because argon is heavier than air. The argon may also increase soundproofing characteristics and/or reduce corrosion of the window element materials. Further, where the window element comprises three panes, two separate intermediate spaces may be considered to be formed between the three panes, and either one or both of these intermediate spaces may be filled with argon gas.

The interactive film and/or the projection film may be attached to the first and/or second pane by laminating. An interactive film and/or a projection film may also be provided with a self-adhesive layer, so that it may be attached to a pane by applying the self-adhesive layer to the surface of the pane.

The interactive film may be attached to the first pane by liquid laminating.

The projection film may be attached to the first or second pane by liquid laminating.

Liquid laminating may be performed by applying a liquid to a pane, placing the interactive film or projection film against the surface of the pane, applying the liquid to the interactive film or projection film and pressing the interactive film or projection film evenly against the surface of the pane, e.g. using a rubber blade. The liquid may be e.g. water or a mixture of water and a detergent such as a soap.

A window comprising the window element according to one or more embodiments is also disclosed. The window may comprise, in addition to the window element, other components, such as a frame, one or more further panes, and/or means for attaching the window element to the window. The window may also be a display window, such as a show window of a shop.

A method for manufacturing the window element according to one or more embodiments comprises
attaching an interactive film to a first pane;
attaching a projection film to the first pane or to a second pane; and
assembling the first pane and at least a second pane into a window element so that the interactive film and the projection film are disposed in an intermediate space formed between the at least two panes.

In the context of the method, the interactive film may be any interactive film described in this specification, and the projection film may be any projection film described in this specification. The panes may also be any panes described in this specification.

The at least two panes may be assembled by attaching them to each other via suitable means for attaching panes together, such as one or more spacer bars disposed between the panes, one or more adhesive strips, sealants and/or fillers. The bar separates the panes. Window elements attached in this manner are also known as insulation glazings or insulation glazing units. The one or more spacer bars may have a thickness of about 6 to about 20 mm. A spacer bar may be e.g. a bar made of aluminium, steel or plastic or other suitable material, provided between the panes. The spacer bar may also be made of an elastic and/or resilient material, e.g. a thermoplastic elastomer, such as polysulfide, and/or butyl. Such spacers are also known as thermoplastic spacers. The spacer bar may be sealed by means of an adhesive, sealant or a filler. Suitable sealing means may be e.g. a butyl strip or an elastic mass such as butyl filler or polysulfide. Suitable filler materials may be e.g. silicone, polysulfide, or butyl.

The method may comprise attaching the projection film to a second pane of the at least two panes. In such an embodiment, the second pane is different from the first pane to which the interactive film is attached. The method may comprise attaching the projection film to the surface of the second pane.

The method may comprise assembling the first pane and at least a second pane into a window element so that the interactive film and the projection film are attached to opposing surfaces of the first and the second pane.

The method may comprise attaching an interactive film to a first pane and a projection film to to a second pane.

The method may comprise attaching the interactive film to the surface of the first pane and the projection film to the surface of a second pane.

The method may comprise attaching the interactive film and the projection film to a first pane so that they are at least partially superimposed.

The method may comprise attaching the interactive film and the projection film to the surface of a first pane so that they are at least partially superimposed. In such an embodiment, the interactive film and the projection film may both be attached on the surface of the first pane. Alternatively, the interactive film may be attached to the surface of the first pane, and the projection film may be attached to the interactive film. The projection film may be attached to the interactive film directly, so that the projection film and the interactive film are in direct contact, or indirectly, e.g. via a medium such as an adhesive or suitable fastening means.

The interactive film may be attached to at least a portion of the surface of the first pane, so as to cover at least a portion of the area of the inner surface of the pane. The interactive film may also cover the entire area of the inner surface of the pane. Likewise, the projection film may be attached to at least a portion of the surface of a pane, so as to cover at least a portion of the area of the inner surface of the pane. The projection film may also cover the entire area of the inner surface of a pane.

The interactive film and the projection film may be disposed at least partially in alignment, or they may be disposed in alignment. The interactive film may also cover only a portion of the area of the projection film, so that they are disposed only partially in alignment. The interactive film may also cover only a portion of the area of the information reflected or projected.

An interactive film and/or a projection film may be provided with a self-adhesive layer, so that it may be attached to a pane by applying the self-adhesive layer to the surface of the pane.

The method may comprise attaching the interactive film and/or the projection film to the surface of the pane by laminating.

The method may comprise attaching the interactive film and/or the projection film to the surface of the pane by liquid laminating. The liquid laminating may comprise applying a liquid to a pane; placing the interactive film or projection film against the surface of the pane; optionally applying the liquid to the interactive film or projection film; and pressing the interactive film or projection film evenly against the surface of the pane. The liquid may be e.g. water or a mixture of water and a detergent such as a soap. Pressing the interactive film or projection film may be done e.g. using a rubber blade.

The embodiments described hereinbefore may be used in any combination with each other. Several of the embodiments may be combined together to form a further embodiment. A product or a method may comprise at least one of the embodiments described hereinbefore.

A technical effect of one or more embodiments is that an interactive film capable of functioning through one glass sheet only may be provided; this may provide touch control that is relatively reliable and less subject to disturbances. In display windows a window element such as an insulation glazing unit may be the only glass unit, in particular in colder climates, so that it constitutes the outer surface of the window.

A technical effect of one or more embodiments is that the interactive film and the projection film may be well protected in an intermediate space between the panes, for instance from scratches and from weather conditions that could harm the films.

A technical effect of one or more embodiments is that a good image quality may be provided.

A technical effect of one or more embodiments is that the distance between the interactive film and the projection film may be optimized. This may improve the functioning of the touch control.

A technical effect of one or more embodiments is that the window element may fulfil the requirements of building regulations for insulating exterior windows and may therefore function as a normal insulation window element (insulation glazing).

### EXAMPLES

Reference will now be made in detail to various embodiments, examples of which are illustrated in the accompanying drawings.

For reasons of simplicity, item numbers will be maintained in the following exemplary embodiments in the case of repeating components.

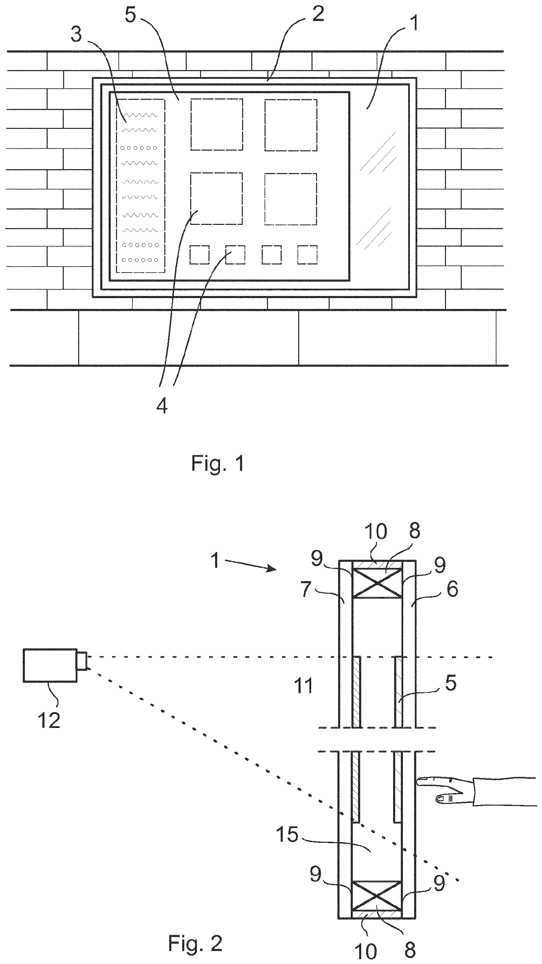

Figure 1 illustrates an outside view of a window of a building comprising a window element 1 according to one embodiment and a frame 2. The window is a display window and the window element 1 is an insulation glazing unit. In this embodiment, an interactive film 5 is attached to a portion of the inner surface of the outer glass pane of the window element 1. A projection film (not shown) behind the interactive film 5 is adapted to render an image projected thereto from the back side, i.e. from the side of the room, so that it is visible to customers outside; however, the image may also be projected to the projection film from the outside. When in use, information 3, 4 appears on specific portions of the projection film, and the interactive film 5 provides touch points 4 for selecting control options.

Figure 2 shows a side view of an embodiment of the window element 1. The window element 1 comprises two glass panes 6, 7 forming an intermediate space 15 between the panes. Aluminium spacer bars 8 are disposed between the panes 6, 7 and glued and sealed to the panes 6, 7 by means of butyl strips 9. A silicone or polysulfide filler 10 is disposed on the outer side of the aluminium bars 8. An interactive film 5 is attached to the inner surface of the first pane 6. A projection film 11 is attached to the inner surface of the second pane 7. When in use, information is projected to the projection film 11 from a projector 12, the information is rendered visible on the projection film 11, and controlling is implemented by touch through the first pane 6. The distance separating the interactive film and the projection film in this embodiment may be e.g. at least 1 mm, or at least 5 mm, or in the range of about 1 to about 20 mm, or about 5 to about 20 mm.

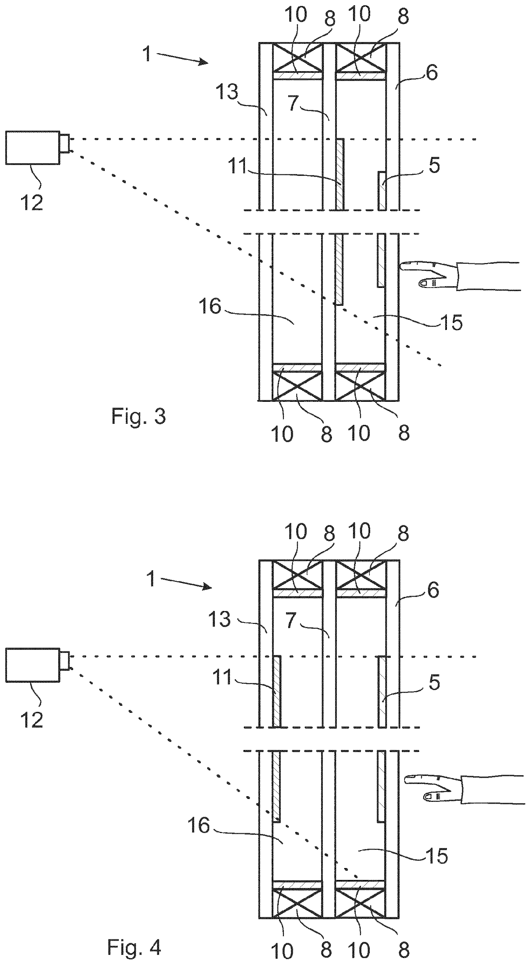

Figure 3 shows a side view of another embodiment of the window element. The window element 1 in this exemplary embodiment comprises a third glass pane 13, so that the element comprises altogether three glass panes 6, 7, 13 forming a first intermediate space 15 between the first and second panes 6, 7 and a second intermediate space 16 between the second and third panes 7, 13. An interactive film 5 is attached to the inner surface of the first pane 6. A projection film 11 is attached to the surface of the second pane 7 that faces the first pane 6. The interactive film 5 and the projection film 11 are thus attached to opposing surfaces of the first and second pane 6, 7. In this embodiment, the second pane 7 is the pane closest to the first pane 6. The interactive film 5 and the projection film 11 are thereby disposed in the first intermediate space 15 between the first and second panes 6, 7. The distance separating the interactive film and the projection film in this embodiment may be e.g. at least 1 mm, or at least 5 mm, or in the range of about 1 to about 20 mm, or about 5 to about 20 mm. Further in this embodiment, the interactive film 5 is smaller than the projection film 11, so that the films are disposed in a partial alignment, but they might equally well be of an essentially similar size, or the interactive film 5 might be larger. When in use, information is projected to the projection film 11 from a projector 12, the information is rendered visible on the projection film 11 and controlling is implemented by touch through the first pane 6. In this embodiment spacer bars 8 made of thermoplastic polysulfide are disposed between the panes 6, 7, 13 and sealed by butyl mass 10. In this embodiment, the second intermediate space 16 may be filled with argon. It may also be possible to fill the first intermediate space 15 with argon.

Figure 4 illustrates a side view of an example of a window element. This example is otherwise similar to the embodiment depicted in Fig. 3, except that the projection film 11 is attached to the surface of the third pane 13 and is thereby disposed in the second intermediate space 16 between the second and third panes 7, 13. The distance separating the interactive film and the projection film in this embodiment may be e.g. at least 10 mm, or at least 14 mm, or in the range of about 10 to about 70 mm, or about 14 to about 42 mm. The distance may depend on the thickness of the spacer bars 8 and on the thickness of the third pane 13. Alternatively, the projection film 11 could also be attached to the surface of the second pane 7 that is opposite to the third pane 13 so that it is disposed in the second intermediate space 16.

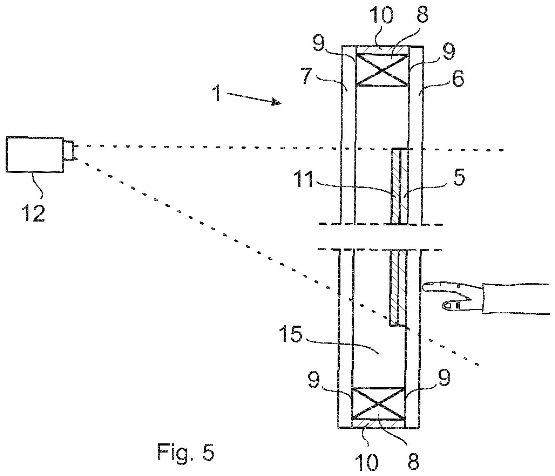

Figure 5 shows a side view of a further embodiment of the window element. This embodiment is otherwise similar to the embodiment depicted in Fig. 2, except that in this exemplary embodiment the projection film 11 and the interactive film 5 are superimposed. The projection film 11 is attached to the surface of the interactive film 5 using an adhesive.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. An insulation glazing unit (1) for controlling information (3, 4) reflected or projected to a surface of the insulation glazing unit by means of an interactive film (5) attached to the insulation glazing unit, wherein
the insulation glazing unit comprises at least two panes (6, 7, 13) forming an intermediate space (15) between the at least two panes;
the interactive film (5) is disposed in the intermediate space (15) and attached to a first pane (6) of the at least two panes (6, 7, 13), and the controlling is implementable by touch through the first pane (6) ;
the insulation glazing unit (1) comprises a projection film (11) for displaying the information (3, 4) reflected or projected thereon; and
the projection film (11) is disposed in the intermediate space (15) between the at least two panes (6, 7, 13), the interactive film (5) and the projection film (11) being at least partially superimposed and attached to the first pane (6), or
the interactive film (5) is attached to the surface of the first pane (6) and the projection film (11) is attached to the surface of a second pane (7) facing the first pane (6), the interactive film and the projection film being thereby disposed in the intermediate space (15) between the first and second panes (6, 7).

2. The insulation glazing unit according to claim 1, wherein the insulation glazing unit comprises at least three panes (6, 7, 13), the projection film is attached to a second pane (7) of the at least three panes (6, 7, 13), and the second pane (7) is the pane closest to the first pane (6).

3. The insulation glazing unit according to claim 1, wherein the interactive film (5) and the projection film (11) are attached on the surface of the first pane (6).

4. The insulation glazing unit according to any one of claims 1 - 3, wherein the interactive film and the projection film are disposed at least partially in alignment.

5. The insulation glazing unit according to any one of claims 1 - 4, wherein the projection film and/or the interactive film are essentially transparent.

6. The insulation glazing unit according to any one of claims 1 - 5, wherein the interactive film (5) is a touch-sensitive film capable of sensing touch capacitively, resistively, inductively, or by any other touch detection mechanism.

7. The insulation glazing unit according to any one of claims 1 - 6, wherein the at least two panes (6, 7, 13) are glass panes, optionally anti-reflective glass panes.

8. The insulation glazing unit according to any one of claims 1 - 7, wherein the interactive film (5) is attached to the first pane by liquid laminating and/or the projection film (11) is attached to the first or second pane by liquid laminating.

9. A window comprising the insulation glazing unit (1) according to any one of claims 1 - 8.

10. A method for manufacturing the insulation glazing unit (1) according to any one of claims 1 - 8, comprising
attaching an interactive film (5) to a first pane (6) ;
attaching a projection film (11) to the first pane (6) or to a second pane (7); and
assembling the first pane (6) and at least a second pane (7) into a insulation glazing unit (1) so that the interactive film (5) and the projection film (11) are disposed in an intermediate space (15) formed between the at least two panes (6, 7, 13).

11. The method according to claim 10, comprising attaching the interactive film (5) and/or the projection film (11) to the surface of the pane (6, 7) by liquid laminating.

## Patentansprüche

1. Isolierglaseinheit (1) zum Steuern von Information (3, 4), die auf eine Oberfläche der Isolierglaseinheit reflektiert oder projiziert wurde, mit Hilfe eines an der Isolierglaseinheit angebrachten interaktiven Films (5), wobei
die Isolierglaseinheit wenigstens zwei Scheiben (6, 7, 13) umfasst, die einen Zwischenraum (15) zwischen den wenigstens zwei Scheiben ausbildet;
der interaktive Film (5) in dem Zwischenraum (15) angeordnet und an einer ersten Scheibe (6) der wenigstens zwei Scheiben (6, 7, 13) angebracht ist und das Steuern implementierbar ist durch Berührung über die erste Scheibe (6);
die Isolierglaseinheit (1) einen Projektionsfilm (11) zum Darstellen der darauf reflektierten oder projizierten Information (3, 4) umfasst; und
der Projektionsfilm (11) in dem Zwischenraum (15) zwischen den wenigstens zwei Scheiben (6, 7, 13) angeordnet ist, wobei der interaktive Film (5) und der Projektionsfilm (11) einander zumindest teilweise überlagern und an der ersten Scheibe (6) angebracht sind, oder
der interaktive Film (5) an der Oberfläche der ersten Scheibe (6) und der Projektionsfilm (11) an der Oberfläche einer zweiten Scheibe (7), die der ersten Scheibe (6) gegenüber liegt, angebracht sind, wobei der interaktive Film und der Projektionsfilm dabei in dem Zwischenraum (15) zwischen der ersten und zweiten Scheibe (6, 7) angeordnet sind.

2. Isolierglaseinheit nach Anspruch 1, wobei die Isolierglaseinheit wenigstens drei Schreiben (6, 7, 13) umfasst, der Projektionsfilm an einer zweiten Scheibe (7) der wenigstens drei Scheiben (6, 7, 13) angebracht ist und die zweite Scheibe (7) die der ersten Scheibe (6) nächststehende Scheibe ist.

3. Isolierglaseinheit nach Anspruch 1, wobei der interaktive Film (5) und der Projektionsfilm (11) an der Oberfläche der ersten Scheibe (6) angebracht sind.

4. Isolierglaseinheit nach einem der Ansprüche 1-3, wobei der interaktive Film und der Projektionsfilm zumindest teilweise fluchtend angeordnet sind.

5. Isolierglaseinheit nach einem der Ansprüche 1-4, wobei der Projektionsfilm und/oder der interaktive Film im Wesentlichen transparent sind.

6. Isolierglaseinheit nach einem der Ansprüche 1-5, wobei der interaktive Film (5) ein berührungsempfindlicher Film ist, der fähig ist, eine Berührung kapazitiv, resistiv, induktiv oder über jeglichen anderen berührungsermittelnden Mechanismus zu erfassen.

7. Isolierglaseinheit nach einem der Ansprüche 1-6, wobei die wenigstens zwei Scheiben (6, 7, 13) Glasscheiben, optional Antireflex-Glasscheiben sind.

8. Isolierglaseinheit nach einem der Ansprüche 1-7, wobei der interaktive Film (5) an der ersten Scheibe durch Flüssigkeitsbeschichten angebracht ist und/oder der Projektionsfilm (11) an der ersten oder zweiten Scheibe durch Flüssigkeitsbeschichten angebracht ist.

9. Fenster mit der Isolierglaseinheit (1) nach einem der Ansprüche 1-8.

10. Verfahren zum Herstellen der Isolierglaseinheit (1) nach einem der Ansprüche 1-8, umfassend das
Anbringen eines interaktiven Films (5) an einer ersten Scheibe (6);
Anbringen eines Projektionsfilms (11) an einer ersten Scheibe (6) oder an einer zweiten Scheibe (7); und
Zusammenfügen der ersten Scheibe (6) und wenigstens einer zweiten Scheibe (7) zu einer Isolierglaseinheit (1), sodass der interaktive Film (5) und der Projektionsfilm (11) in einem zwischen den wenigstens zwei Scheiben (6, 7, 13) ausgebildeten Zwischenraum (15) angeordnet sind.

11. Verfahren nach Anspruch 10, umfassend das Anbringen des interaktiven Films (5) und/oder des Projektionsfilms (11) an der Oberfläche der Scheibe (6, 7) mittels Flüssigkeitsbeschichtung.

## Revendications

1. Unité de vitrage isolant (1) pour commander des informations (3, 4) réfléchies ou projetées sur une surface de l'unité de vitrage isolant au moyen d'un film interactif (5) fixé à l'unité de vitrage isolant, dans laquelle
l'unité de vitrage isolant comprend au moins deux vitres (6, 7, 13) formant un espace intermédiaire (15) entre les au moins deux vitres ;
le film interactif (5) est disposé dans l'espace intermédiaire (15) et fixé à une première vitre (6) des au moins deux vitres (6, 7, 13), et la commande peut être mise en oeuvre par toucher par le biais de la première vitre (6) ;
l'unité de vitrage isolant (1) comprend un film de projection (11) pour afficher les informations (3, 4) réfléchies ou projetées sur celui-ci ; et
le film de projection (11) est disposé dans l'espace intermédiaire (15) entre les au moins deux vitres (6, 7, 13), le film interactif (5) et le film de projection (11) étant au moins partiellement superposés et fixés à la première vitre (6), ou
le film interactif (5) est fixé à la surface de la première vitre (6) et le film de projection (11) est fixé à la surface d'une deuxième vitre (7) faisant face à la première vitre (6), le film interactif et le film de projection étant ainsi disposés dans l'espace intermédiaire (15) entre les première et première vitres (6, 7).

2. Unité de vitrage isolant selon la revendication 1, dans laquelle l'unité de vitrage isolant comprend au moins trois vitres (6, 7, 13), le film de projection est fixé à une deuxième vitre (7) des au moins trois vitres (6, 7, 13), et la deuxième vitre (7) est la vitre la plus proche de la première vitre (6).

3. Unité de vitrage isolant selon la revendication 1, dans laquelle le film interactif (5) et le film de projection (11) sont fixés sur la surface de la première vitre (6).

4. Unité de vitrage isolant selon l'une quelconque des revendications 1 à 3, dans laquelle le film interactif et le film de projection sont disposés au moins partiellement en alignement.

5. Unité de vitrage isolant selon l'une quelconque des revendications 1 à 4, dans laquelle le film de projection et/ou le film interactif sont essentiellement transparents.

6. Unité de vitrage isolant selon l'une quelconque des revendications 1 à 5, dans laquelle le film interactif (5) est un film sensible au toucher capable de détecter le toucher de manière capacitive, résistive, inductive, ou par tout autre mécanisme de détection de toucher.

7. Unité de vitrage isolant selon l'une quelconque des revendications 1 à 6, dans laquelle les au moins deux vitres (6, 7, 13) sont des vitres en verre, optionnellement des vitres en verre antireflet.

8. Unité de vitrage isolant selon l'une quelconque des revendications 1 à 7, dans laquelle le film interactif (5) est fixé à la première vitre par stratification liquide et/ou le film de projection (11) est fixé à la première ou deuxième vitre par stratification liquide.

9. Fenêtre comprenant l'unité de vitrage isolant (1) selon l'une quelconque des revendications 1 à 8.

10. Procédé de fabrication de l'unité de vitrage isolant (1) selon l'une quelconque des revendications 1 à 8, comprenant
la fixation d'un film interactif (5) à une première vitre (6) ;
la fixation d'un film de projection (11) à la première vitre (6) ou à une deuxième vitre (7) ; et
l'assemblage de la première vitre (6) et d'au moins une deuxième vitre (7) dans une unité de vitrage isolant (1) de telle sorte que le film interactif (5) et le film de projection (11) sont disposés dans un espace intermédiaire (15) formé entre les au moins deux vitres (6, 7, 13).

11. Procédé selon la revendication 10, comprenant la fixation du film interactif (5) et/ou du film de projection (11) à la surface de la vitre (6, 7) par stratification liquide.
